# EUROPEAN PATENT SPECIFICATION

(11) **EP 3 323 670 B1**
(45) Date of publication and mention of the grant of the patent: **07.08.2019**
(21) Application number: 17199123.5
(22) Date of filing: 30.10.2017
(51) Int. Cl.: B60N 2/30

(54) **VEHICLE SEAT DEVICE**
FAHRZEUGSITZVORRICHTUNG
DISPOSITIF DE SIÈGE DE VÉHICULE

(30) Priority: 16.11.2016 JP 2016223447
(43) Date of publication of application: 23.05.2018
(73) Proprietor: AISIN SEIKI KABUSHIKI KAISHA, Kariya-shi Aichi 448-8650 (JP)
(72) Inventor: MIZUNO, Ryosuke, Kariya-shi, Aichi 448-8650 (JP); NOZUE, Katsuya, Kariya-shi, Aichi 448-8650 (JP)
(74) Representative: TBK

(56) References cited:
- WO-A1-2004/091964
- DE-A1- 4 232 124
- DE-A1-102012 013 451

## Description

### TECHNICAL FIELD

This disclosure relates to a vehicle seat device.

### BACKGROUND DISCUSSION

In the related art, there is a vehicle seat device where a child seat stored in a seat can be developed on the seat. For example, a seat device disclosed in JP 8-11604A (Reference 1) includes a movable member (a support body and a cushion body) that forms a cushion portion of the child seat on a seat cushion by dividing and rotating a backrest surface of a seat back. In addition, US Patent No. 7413249 (Reference 2) discloses a structure which stores a so-called balloon-type child seat which is bulged by filling with air within a storage chamber provided on an inside of the seat. In the related art, the child seat which is bulged within the storage chamber pushes and opens the backrest surface of the seat back or a lid portion provided on a seating surface of the seat cushion, and thereby the child seat is developed on the seat. Document WO2004091964 discloses a vehicle seat device comprising:a back base that is fixed to a frame of a seat back; a movable member that is rotatably connected to the back base; and an air bag that is provided on an inside of a seat cover covering the back base and the movable member.

However, in the storage-type child seat of the related art, there is a problem that it is difficult to set an optimum sheet support shape corresponding to a physique of a child seated thereon. That is, the support performance thereof is deteriorated by setting the support shape to a large shape in advance based on the growth of the child. Because of this restriction, there is a concern that a period during which the storage-type child seat can be used is limited, so that there still remains room for improvement in this respect.

Thus, a need exists for a vehicle seat device capable of imparting support performance suitable for a storage-type child seat.

### SUMMARY

A vehicle seat device according to the invention includes: a back base that is fixed to a frame of a seat back; a movable member that is rotatably connected to the back base; and an air bag that is provided on an inside of a seat cover covering the back base and the movable member. The movable member is rotated so that a backrest surface of the seat back is divided to develop a child seat on a seat. The air bag is expanded so that the seat cover is bulged to form a seat support shape of the child seat.

According to this configuration, the seat cover, which is bulged by the expansion of the air bag, is formed in an optimum seat support shape corresponding to a physique of a child seated on the child seat. That is, the seat cover of a portion abutting against the seated child is bulged so that the seat support shape of the child seat can be optimized according to the physique of the child. Furthermore, the back base and the developed movable member function as the frame of the child seat so that a seat load applied to the child seat can be stably supported. Therefore, it is possible to apply support performance suitable for the child seat developed on the seat.

It is preferable that the vehicle seat device further includes a side paddle that develops a side support portion of the child seat on the backrest surface by rotating with respect to the back base around a connecting shaft extending in an upward and downward direction of the seat back.

According to this configuration, a seat load in the width direction can be supported by the developed side support portion. Furthermore, the side paddle functions as a frame of the child seat on the inside of the seat cover forming a support surface of the side support portion. Therefore, it is possible to apply support performance suitable for the child seat developed on the seat.

In the vehicle seat device, it is preferable that the air bag is provided to be interposed between the side paddle and the seat cover.

According to this configuration, the seat cover, which is bulged by the expansion of the air bag, is formed in an optimum seat support shape corresponding to a physique of a child seated on the child seat with respect to the side support portion of the child seat developed by the rotation of the side paddle. Therefore, it is possible to apply support performance suitable for the child seat developed on the seat.

It is preferable that the vehicle seat device further includes a cushion base that develops a seating portion of the child seat on the seat cushion by rotating with respect to the back base around a connecting shaft extending in a width direction of the seat back.

According to this configuration, the seat load of the child seated on the child seat can be supported by the developed seating portion. Furthermore, the cushion base functions as the frame of the child seat on the inside of the seat cover forming the seating surface of the seating portion. Therefore, it is possible to apply support performance suitable for the child seat developed on the seat.

In the vehicle seat device, it is preferable that the air bag is provided to be interposed between the cushion base and the seat cover.

According to this configuration, for the seating portion of the child seat developed by the rotation of the cushion base, the seat cover, which is bulged by the expansion of the air bag, is formed in an optimum seat support shape corresponding to the physique of the child seated on the child seat. Therefore, it is possible to apply support performance suitable for the child seat developed on the seat.

In the vehicle seat device, it is preferable that the air bag is provided to be interposed between the back base and the seat cover.

According to this configuration, for a backrest portion of the child seat at which the seat cover and the back base are formed, the seat cover, which is bulged by the expansion of the air bag, is formed in the optimum seat support shape corresponding to the physique of the child seated on the child seat. Therefore, it is possible to apply support performance suitable for the child seat developed on the seat.

It is preferable that the vehicle seat device further includes an air bag for developing that is interposed between the back base and the seat cover, and between the movable member and the seat cover in a state of straddling the connecting shaft between the back base and the movable member.

According to this configuration, the air bag for developing is interposed between the back base and the movable member in a state of being folded when the child seat is stored. In addition, the air bag for developing is expanded in such a manner that the folded state is extended by being filled with air. The movable member can be rotated in a developing direction based on a force pressing the back base and the movable member by the expanded air bag for developing. That is, the child seat can be automatically developed. Therefore, convenience of the user can be improved.

It is preferable that the vehicle seat device further includes a side paddle that develops the side support portion of the child seat on the backrest surface by rotating with respect to the back base around the connecting shaft extending in the upward and downward direction of the seat back, and an air bag for developing that is interposed between the back base and the seat cover, and between the side paddle and the seat cover in a state of straddling the connecting shaft.

According to this configuration, the air bag for developing is interposed between the back base and the side paddle in a state of being folded when the child seat is stored. In addition, the air bag for developing is expanded in such a manner that the folded state is extended by being filled with air. The side paddle can be rotated in the developing direction based on a force for pressing the back base and the side paddle by the expanded air bag for developing. That is, the side support portion of the child seat can be automatically developed. Therefore, convenience of the user can be improved.

In the vehicle seat device, it is preferable that the air bag for developing is provided at an upper end portion of the side paddle.

According to this configuration, the expanded air bag for developing causes the seat cover of a portion abutting against a head portion of the child seated on the child seat to bulge. Therefore, it is possible to apply high support performance to the portion abutting against the head portion of the child.

In the vehicle seat device, it is preferable that the air bag for developing is integrally configured with an air bag for support which is interposed between the side paddle and the seat cover.

According to this configuration, an optimum seat support shape corresponding to the physique of the child seated on the child seat can be promptly formed along with the development of the child seat.

It is preferable that the vehicle seat device further includes a cushion base that develops the seating portion of the child seat on the seat cushion by rotating with respect to the back base around the connecting shaft extending in the width direction of the seat back, and the cushion base is configured to be rotated in a developing direction by being pressed against the side paddle rotated by expansion of the air bag for developing.

According to this configuration, the seating portion and the side support portion of the child seat can be automatically developed.

It is preferable that the vehicle seat device further includes an urging member that urges the movable member to rotate in a storage direction. Therefore, air inside the air bag for developing is promptly discharged and the movable member is capable of smoothly and promptly being stored.

In the vehicle seat device, it is preferable that the back base and the movable member are provided with stopper portions capable of limiting a rotation amount of the movable member in a developing direction by abutting against each other. Therefore, the developing position of the movable member can be defined. The developing position is held so that the function as the frame of the child seat can be strengthened.

According to the invention, it is possible to apply support performance suitable for the storage-type child seat.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a vehicle seat;
Fig. 2 is a perspective view (storage state) of a seat device that develops a storage-type child seat on the seat;
Fig. 3 is a perspective view (partially developed state) of the seat device that develops the storage-type child seat on the seat;
Fig. 4 is a perspective view (developed state) of the seat device that develops the storage-type child seat on the seat;
Fig. 5 is a perspective view (developed state) of the seat device;
Fig. 6 is a sectional view (developed state and cross section VI-VI in Fig. 4) of the seat device;
Fig. 7 is a sectional view (storage state and cross section VII-VII in Fig. 2) of the seat device;
Fig. 8 is a sectional view (developed state and cross section VIII-VIII in Fig. 4) of the seat device;
Fig. 9 is a sectional view (developed state and cross section IX-IX in Fig. 4) of the seat device;
Fig. 10 is a sectional view (developed state and cross section X-X in Fig. 4) of the seat device;
Fig. 11 is a schematic configuration view of the seat device; and
Figs. 12A and 12B are enlarged sectional views (Fig. 12A: storage state, Fig. 12B: developed state, and cross section IX-IX in Fig. 4) of the seat device in the vicinity of a connecting shaft of a side paddle with respect to a back base.

### DETAILED DESCRIPTION

Hereinafter, an embodiment of a vehicle seat device that develops a storage-type child seat on a seat will be described with reference to the drawings.

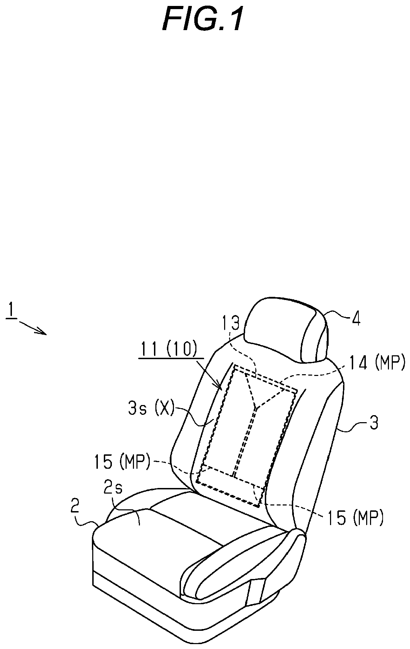

As illustrated in Fig. 1, a vehicle seat 1 includes a seat cushion 2 and a seat back 3 that is provided at a rear end portion of the seat cushion 2. In addition, a headrest 4 is provided at an upper end of the seat back 3. A storage-type child seat 10 is built in the seat 1.

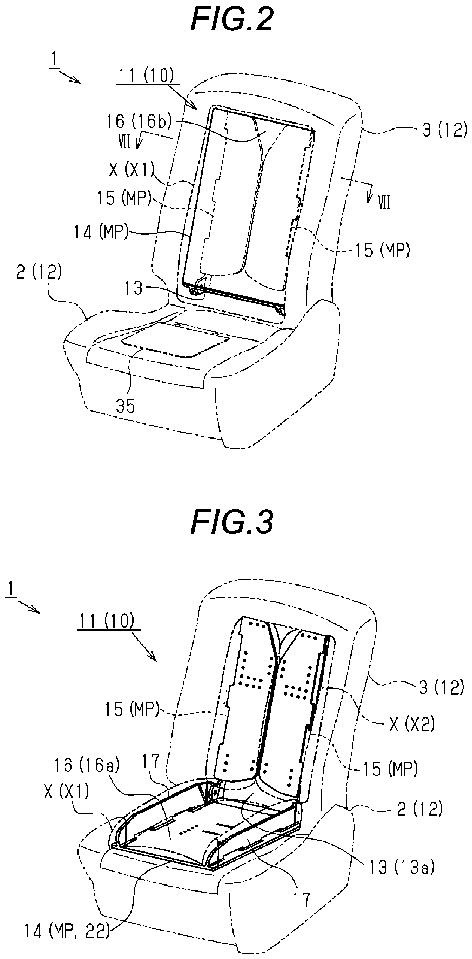

Specifically, as illustrated in Figs. 1 to 4, the seat 1 of the embodiment is provided with a seat device 11 that develops the child seat 10 on the seat 1 by dividing a backrest surface 3s of the seat back 3. In addition, an outer shell member (shell) 12 that covers an outside of a seat frame is illustrated on an inside of the seat 1 (seat cover X) together with the seat device 11 in Figs. 2 to 4. Furthermore, the seat device 11 has a function of adjusting a seat support shape of the child seat 10. Therefore, the seat device 11 of the embodiment is capable of setting an optimum seat support shape corresponding to a physique of a child seated on the child seat 10 which is developed on the seat 1.

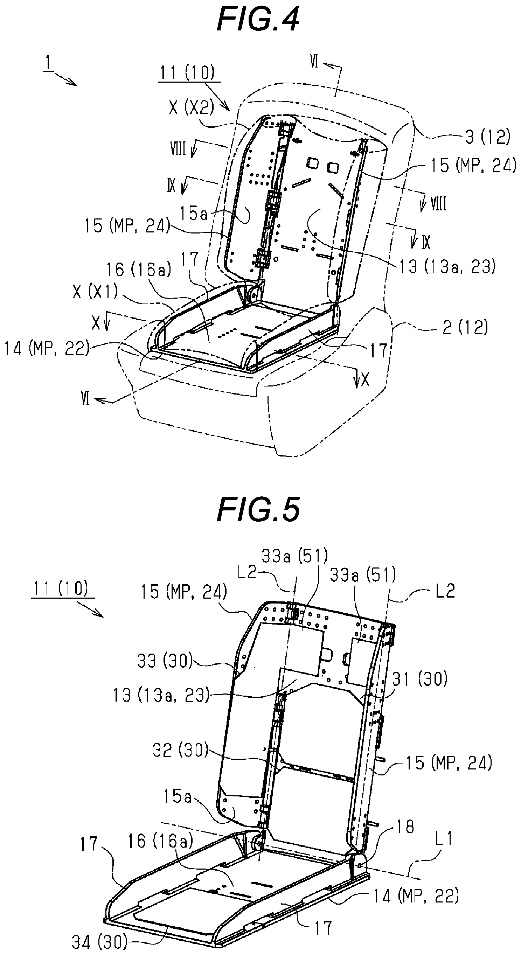

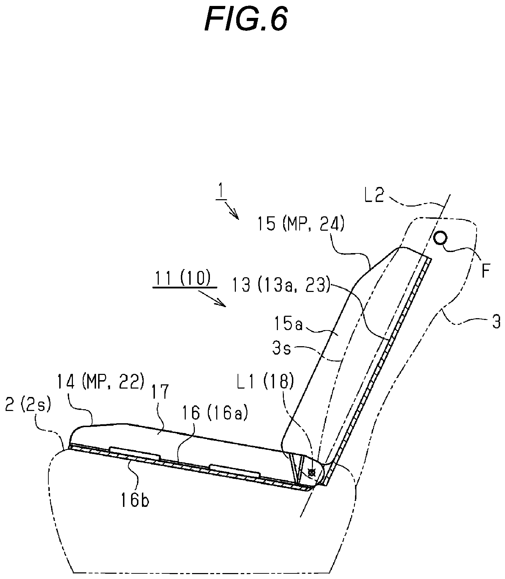

Specifically, as illustrated in Figs. 5 and 6, the seat device 11 of the embodiment includes a back base 13 that is fixed to a frame F serving as a skeleton of the seat back 3. Specifically, the back base 13 has a substantially rectangular flat plate-like outer shape. In addition, the back base 13 is disposed so as to follow the backrest surface 3s of the seat back 3. The back base 13 is configured to be resiliently supported on the inside of the seat back 3 by being fixed to the frame F via a spring member (not illustrated).

In addition, the seat device 11 of the embodiment includes a cushion base 14 rotatably connected to a lower end portion (end portion on the lower side in each drawing) of the back base 13. Furthermore, the seat device 11 includes a pair of right and left side paddles 15 rotatably connected to both end portions of the back base 13 in a width direction. The seat device 11 of the embodiment is configured to be capable of developing the child seat 10 on the seat 1 and storing the developed child seat 10 on the backrest surface 3s of the seat back 3 by rotating movable members MP (14 and 15).

Specifically, the cushion base 14 of the embodiment includes a substantially rectangular flat plate-like body portion 16 and a pair of side wall portions 17 erected in the vicinity of both end portions of the body portion 16 in the width direction. In the cushion base 14 of the embodiment, outer dimensions of the body portion 16 are set slightly larger than the back base 13. In addition, each side wall portion 17 extends along a longitudinal direction of the body portion 16. Furthermore, each side wall portion 17 is formed with a connecting portion 18 to the back base 13 on one end side in the longitudinal direction which is a base end side (end portion of the right side in Fig. 6) of the cushion base 14. The cushion base 14 of the embodiment is configured to connect to the lower end portion of the back base 13 such that the connecting portions 18 form a connecting shaft L1 extending in the width direction of the seat back 3.

On the other hand, each side paddle 15 of the embodiment has a substantially rectangular flat plate-like outer shape. In addition, in each side paddle 15, a length in the width direction corresponding to a short side of the rectangular shape is set to be substantially a half of a length of the back base 13 in the width direction, specifically slightly shorter than the half of the length the back base 13 in the width direction. Each side paddle 15 of the embodiment is configured to connect to the end portion of the back base 13 in the width direction having a connecting shaft L2 extending in an upward and downward direction (upward and downward direction in Figs. 5 and 6) of the seat back 3.

As illustrated in Figs. 2, 3, and 7, in a case where the child seat 10 is stored in the backrest surface 3s of the seat back 3, each side paddle 15 is folded in such a manner that a surface 15a thereof faces a surface 13a of the back base 13 by rotating around the connecting shaft L2. In addition, the cushion base 14 is folded in such a manner that the body portion 16 covers each side paddle 15 which is folded on the back base 13 side by rotating around the connecting shaft L1 (see Fig. 5). That is, in this state, each side paddle 15 is stored in a substantially U-shaped cross section of the cushion base 14. Therefore, the seat device 11 of the embodiment is configured such that a seat cover X1 covering the cushion base 14, specifically, a portion covering a rear surface 16b side of the body portion 16 forms the backrest surface 3s of the seat back 3 together with a seat cover X0 covering the outer shell member 12 of the seat back 3.

On the other hand, as illustrated in Fig. 3 and 6, in a case where the child seat 10 is developed on the seat 1, the cushion base 14 is rotated around the connecting shaft L1 with respect to the back base 13 in such a manner that an upper end side is tilted. That is, the seat cover X1 covering the cushion base 14 is tilted together with the cushion base 14 so that the backrest surface 3s of the seat back 3 is divided. The seat device 11 of the embodiment is configured to develop a seating portion 22 of the child seat 10 on the seat cushion 2 in a state where the tilted cushion base 14 is placed on a seating surface 2s.

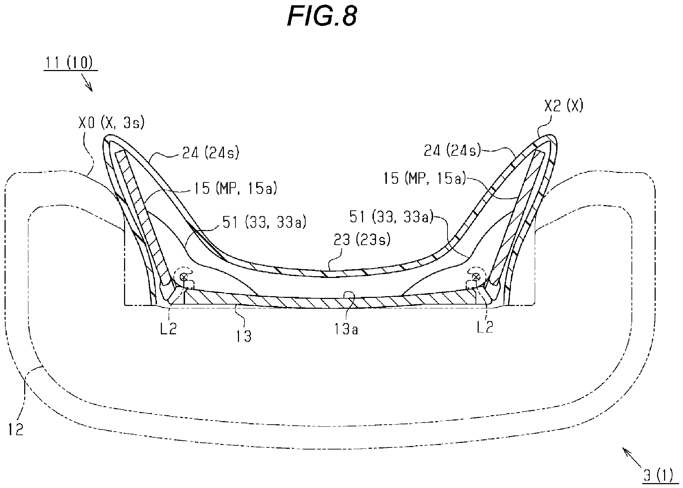

In addition, as illustrated in Figs. 4 and 8, in this case, each side paddle 15 is rotated in a direction in which a surface 15a thereof is separated from the surface 13a of the back base 13. Therefore, the seat device 11 of the embodiment is configured such that a backrest portion 23 of the child seat 10 is developed on the backrest surface 3s of the seat back 3 and side support portions 24 of the child seat 10 are developed on both sides of the backrest portion 23.

That is, as illustrated in Fig. 8, the seat device 11 of the embodiment is configured such that in such a developed state, a seat cover X2 covering the back base 13 and each side paddle 15, specifically, a portion covering the surface 13a of the back base 13 forms a backrest surface 23s (of the backrest portion 23) of the child seat 10. The portion covering the surface 15a of each side paddle 15 in the seat cover X2 is configured to form a support surface 24s of the side support portion 24.

In addition, as illustrated in Fig 5, the seat device 11 of the embodiment includes a plurality of air bags 30 fixed to the back base 13, and the cushion base 14 and each side paddle 15 configuring the movable members MP. Specifically, the surface 13a of the back base 13 is provided with a pair of air bags 31 and 32 aligned in the upward and downward direction. In addition, the surface 15a of each side paddle 15 is provided with an air bag 33 extending along the longitudinal direction thereof. Also, the body portion 16 of the cushion base 14 is provided with an air bag 34 at a front end portion (see Fig. 6, in the vicinity of an end portion on the left side in the same drawing) of a surface 16a.

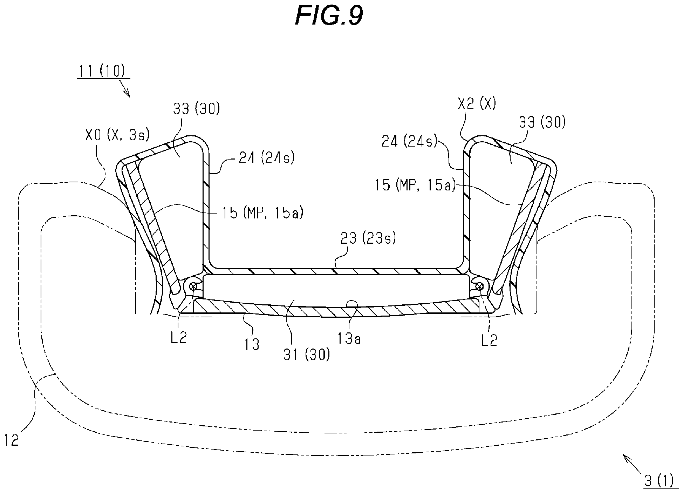

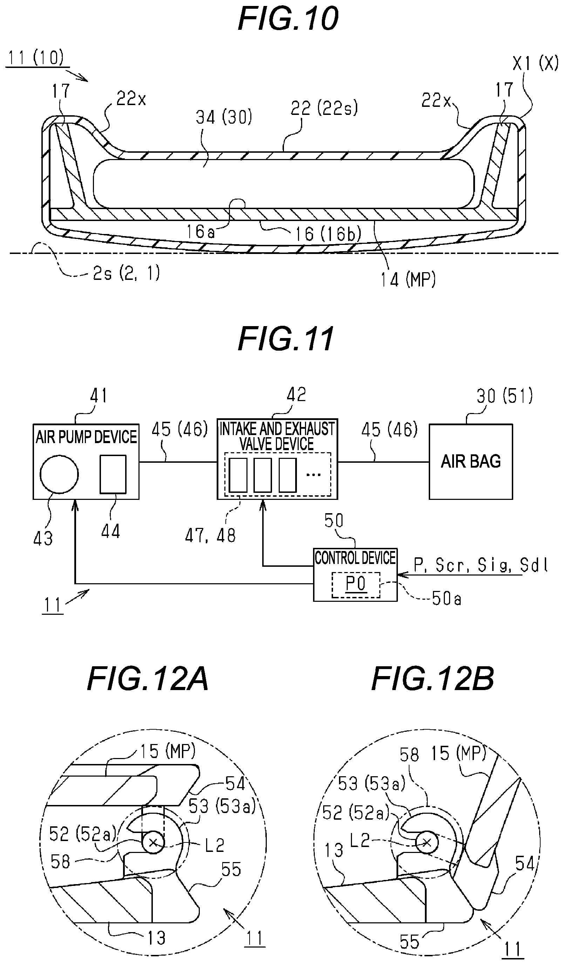

That is, as illustrated in Figs. 9 and 10, each of the air bags 30 (31 to 34) is provided on an inside of each of the seat covers X (X1 and X2) covering the back base 13 and each of the movable members MP (14 and 15). In addition, each air bag 30 is expanded by being filled (intake) with air and is contracted by discharging (exhausting) the internal air. The seat device 11 of the embodiment is configured to form the seat support shape of the child seat 10 by expanding each air bag 30.

Specifically, as illustrated in Fig. 9, the air bags 31 (32) which are interposed between the back base 13 and the seat cover X2 covering the back base 13 are expanded so that the seat cover X2 of the portion forming the backrest surface 23s of the child seat 10 is bulged. Each air bag 33 which is interposed between each side paddle 15 and the seat cover X2 covering each side paddle 15 is expanded so that the seat cover X2 is bulged at the portion forming the support surface 24s of the side support portion 24.

In addition, as illustrated in Fig. 10, the seat device 11 of the embodiment is configured such that the seat cover X1 covering the cushion base 14, that is, the portion covering a surface 16a of the body portion 16 forms a seating surface 22s of (seating portion 22) of the child seat 10 in the developed state of the child seat 10. Furthermore, the portion covering each side wall portion 17 in the seat cover X1 forms a side support surface 22x of the seating portion 22. The air bag 34, which is interposed between the cushion base 14 and the seat cover X1 covering the cushion base 14, is expanded so that the seating surface 22s of the child seat 10, specifically, the seat cover X1 of a portion forming the front end portion is bulged.

As described above, in the seat device 11 of the embodiment, each of the air bags 30 (31 to 34) for supporting, which is provided in the back base 13 and each of the movable members MP (14 and 15), is expanded so that the seat covers X (X1 and X2) of portions abutting against the child seated on the child seat 10 are bulged. The seat support shape of the child seat 10 is capable of being adjusted by controlling expansion and contraction of each of the air bags 30 (31 to 34).

Specifically, as illustrated in Fig. 11, the seat device 11 of the embodiment includes an air pump device 41 that pressure-feeds air to each air bag 30 and an intake and exhaust valve device 42 that is interposed between each air bag 30 and the air pump device 41. For the air pump device 41 of the embodiment, an electric pump that drives a pump mechanism 44 with a motor 43 as a drive source is used. Furthermore, the intake and exhaust valve device 42 is connected to each air bag 30 and the air pump device 41 via an actuator 45 made of resin having flexibility. That is, in the seat device 11 of the embodiment, an air flow path 46 communicating with each air bag 30 and the air pump device 41 is formed by an internal passage of the actuator 45 and the intake and exhaust valve device 42. Therefore, the intake and exhaust valve device 42 of the embodiment is configured such that an intake valve 47 and an exhaust valve 48 are disposed in the middle of the flow path 46.

In addition, in the seat device 11 of the embodiment, an operation of each of the intake valve 47, the exhaust valve 48, and the air pump device 41 is controlled by a control device 50. Specifically, an internal pressure P of each air bag 30, an operation input signal Scr, an ignition signal Sig, an door lock signal Sdl, or the like with respect to an operation switch (not illustrated) is input into the control device 50 of the embodiment. The control device 50 of the embodiment is configured to control the operation of each of the intake valve 47, the exhaust valve 48, and the air pump device 41 so as to expand and contract each air bag 30.

Specifically, the control device 50 of the embodiment sets a target value (internal pressure target value P0) for the internal pressure P of each air bag 30. In addition, the control device 50 of the embodiment holds the internal pressure target value P0 in a storage region 50a. Furthermore, in the seat device 11 of the embodiment, a user (for example, a parent of the child) sets the optimum seat support shape using an adjustment switch (not illustrated) in a state where the child is seated on the child seat 10 developed on the seat 1 so that the internal pressure target value P0 of each air bag 30 is updated as needed (support shape adjustment operation). The control device 50 of the embodiment is configured to control the operations of the air pump device 41 and the intake and exhaust valve device 42 so that the detected internal pressure P of each air bag 30 matches the internal pressure target value P0.

More specifically, as illustrated in Fig. 5, in the seat device 11 of the embodiment, the air bag 33 provided in each side paddle 15 is configured such that an upper end portion 33a provided in each side paddle 15, that is, a portion disposed at the upper end portion of the seat back 3 in the upward and downward direction extends to the back base 13 side straddling the connecting shaft L2 of the side paddle 15 with respect to the back base 13.

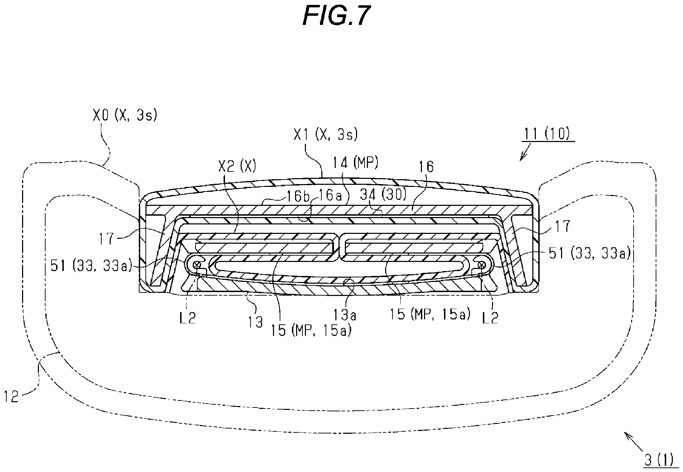

That is, as illustrated in Figs. 7 and 8, as described above, the upper end portion 33a of each air bag 33 is interposed between the back base 13 and the seat cover X2, and the side paddle 15 and the seat cover X2 in a state of straddling the connecting shaft L2.

Specifically, as illustrated in Fig. 7, in a state where the child seat 10 is stored in the backrest surface 3s of the seat back 3, the upper end portion 33a of each air bag 33 is interposed between the back base 13 and each side paddle 15 in a state of being folded into two together with the seat cover X2 covering the back base 13 and each side paddle 15. In addition, as illustrated in Fig. 8, the upper end portion 33a of each air bag 33 is expanded in such a manner that the shape folded into two is extended by filling each air bag 33 with air. The seat device 11 of the embodiment is configured such that each side paddle 15 is rotated in the developing direction based on a force for pressing the back base 13 and the side paddle 15 by the upper end portion 33a of each expanded air bag 33.

That is, in the seat device 11 of the embodiment, each upper end portion 33a of the air bag 33 provided in each side paddle 15 functions as an air bag 51 for developing. When the child seat 10 is used, the side support portion 24 of the child seat 10 can be developed on the backrest surface 3s of the seat back 3 by expanding each air bag 33.

In addition, as illustrated in Fig. 7, as described above, in this case, the seat device 11 of the embodiment is configured such that each side paddle 15 stored in the substantially U-shaped portion of the cross section of the cushion base 14 is rotated in the developing direction while pressing the cushion base 14. Therefore, the cushion base 14 is rotated (tilted) around the connecting shaft L1 with respect to the back base 13 so that the seating portion 22 of the child seat 10 is developed on the seat cushion 2.

More specifically, as illustrated in Figs. 12A and 12B, in the seat device 11 of the embodiment, the connecting shaft L2 of the side paddle 15 with respect to the back base 13 is connected to a connecting portion 52 on the side paddle 15 side having a shaft-like portion 52a extending in the longitudinal direction, and is formed by fitting to a connecting portion 53 having a hook-like portion 53a on the back base 13 side. Stopper portions 54 and 55 capable of limiting a rotation amount of each side paddle 15 in the developing direction are provided at end portions in the width direction of each side paddle 15 and the back base 13 at which the connecting portions 52 and 53 are respectively provided.

In addition, the seat device 11 of the embodiment includes a torsion coil spring 58 provided coaxially with the connecting shaft L2 of the side paddle 15 with respect to the back base 13. Furthermore, each side paddle 15 of the embodiment is rotatably urged in a storage direction based on an elastic force (elastic restoring force) of the torsion coil spring 58. Therefore, in the seat device 11 of the embodiment, the upper end portion 33a thereof promptly discharges air inside each air bag 33 which functions as the air bag 51 for developing and the seat device 11 is capable of smoothly and promptly storing each side paddle 15 on the backrest surface 3s of the seat back 3.

As described above, according to the embodiment, the following effects can be obtained.
(1) The seat device 11 includes the back base 13 that is fixed to the frame F of the seat back 3, the movable members MP (14 and 15) that are rotatably connected to the back base 13, and the air bags 30 (31 to 34) that are provided on the inside of the seat covers X (X1 and X2) covering the back base 13 and the movable member MP. The movable member MP is rotated and thereby the seat device 11 divides the backrest surface 3s of the seat back 3 to develop the child seat 10 on the seat 1. The air bag 30 is expanded and thereby the seat cover X is bulged to form the seat support shape of the child seat 10.
   According to the configuration, the seat cover X, which is bulged by the expansion of the air bag 30, is formed in the optimum seat support shape corresponding to the physique of the child seated on the child seat 10. That is, the seat cover X of the portion abutting against the seated child is bulged so that the seat support shape of the child seat 10 can be optimized according to the physique of the child. Furthermore, the back base 13 and the developed movable member MP function as the frame of the child seat 10 so that a seat load applied to the child seat 10 can be stably supported. Therefore, it is possible to apply support performance suitable for the child seat 10 developed on the seat 1.
(2) The seat device 11 includes a pair of the side paddles 15 rotatably connected to the end portions in the width direction of the back base 13 having the connecting shaft L2 of the seat back 3 extending in the upward and downward direction. Each side paddle 15 is rotated around the connecting shaft L2 so that the side support portion 24 of the child seat 10 is developed on the backrest surface 3s of the seat back 3.
   According to the configuration, the seat load in the width direction can be supported by the developed side support portion 24. Furthermore, the side paddle 15 functions as the frame of the child seat 10 on the inside of the seat cover X2 forming the support surface 24s of the side support portion 24. Therefore, it is possible to apply the support performance suitable for the child seat 10 developed on the seat 1.
(3) The seat device 11 includes the air bag 33 which is interposed between the side paddle 15 and the seat cover X2 covering the side paddle 15.
   According to the configuration, the seat cover X2 which is bulged by the expansion of the air bag 33, is formed in an optimum seat support shape corresponding to a physique of a child seated on the child seat 10 with respect to the side support portion 24 of the child seat 10 developed by the rotation of the side paddle 15. Therefore, it is possible to apply the support performance suitable for the child seat 10 developed on the seat 1.
(4) The seat device 11 includes the cushion base 14 that has the connecting shaft L1 extending in the width direction of the seat back 3 and is rotatably connected to the lower end portion of the back base 13. The cushion base 14 is rotated around the connecting shaft L1 so that the seating portion 22 of the child seat 10 is developed on the seat cushion 2.
   According to the configuration, the seat load of the child seated on the child seat 10 can be supported by the developed seating portion 22. Furthermore, the cushion base 14 functions as the frame of the child seat 10 on the inside of the seat cover X1 forming the seating surface 22s of the seating portion 22. Therefore, it is possible to apply the support performance suitable for the child seat 10 developed on the seat 1.
(5) The seat device 11 includes the air bag 34 which is interposed between the cushion base 14 and the seat cover X1 covering the cushion base 14.
   According to the configuration, the seat cover X1, which is bulged by the expansion of the air bag 34, is formed in the optimum seat support shape corresponding to the physique of the child seated on the child seat 10 for the seating portion 22 of the child seat 10 developed by the rotation of the cushion base 14. Particularly, the seat cover X1 of the portion forming the front end portion of the seating portion 22 is bulged so that the seat support shape of the child seat 10 can be further optimized according to a physique of a small child or baby who is an occupant. Therefore, it is possible to apply the support performance suitable for the child seat 10 developed on the seat 1.
(6) The seat device 11 includes the air bags 31 and 32 which are interposed between the back base 13 and the seat cover X2 covering the back base 13.
   According to the configuration, the seat cover X2, which is bulged by the expansion of each of the air bags 31 and 32, is formed in the optimum seat support shape corresponding to the physique of the child seated on the child seat 10 for the backrest portion 23 of the child seat 10 formed by the seat cover X2 and the back base 13. Therefore, it is possible to apply the support performance suitable for the child seat 10 developed on the seat 1.
(7) The seat device 11 includes the air bag 51 for developing which is interposed between the back base 13 and the seat cover X2, and between the side paddle 15 and the seat cover X2 in a state of straddling the connecting shaft L2 of the side paddle 15 with respect to the back base 13.
   According to the configuration, the air bag 51 for developing is interposed between the back base 13 and the side paddle 15 in a state of being folded when the child seat 10 is stored. In addition, the air bag 51 for developing is expanded in such a manner that the folded state is extended by being filled with air. Each side paddle 15 can be rotated in the developing direction based on the force for pressing the back base 13 and the side paddle 15 by the expanded air bag 51 for developing. That is, the side support portion 24 of the child seat 10 can be automatically developed. Therefore, convenience of the user can be improved.
(8) The air bag 51 for developing is provided at the upper end portion of the side paddle 15. The expanded air bag 51 for developing causes the seat cover X1 of a portion abutting against a head portion of the child seated on the child seat 10 to bulge. Therefore, it is possible to apply high support performance to the portion abutting against the head portion of the child.
(9) The vehicle seat device is characterized in that the air bag 51 for developing is integrally configured with the air bags 30 (33) for support. Therefore, the optimum seat support shape corresponding to the physique of the child seated on the child seat 10 can be promptly formed along with the development of the child seat 10.
(10) The cushion base 14 is configured to be rotated in the developing direction by being pressed against the side paddle 15 rotated by expansion of the air bag 51 for developing. Therefore, the seating portion 22 and the side support portion 24 of the child seat 10 can be automatically developed.
(11) The seat device 11 includes the torsion coil spring 58 as the urging member for urging the side paddle 15 to rotate in the storage direction. Therefore, air inside the air bag 51 for developing is promptly discharged and the side paddle 15 is capable of smoothly and promptly being stored.
(12) The stopper portions 54 and 55 capable of limiting the rotation amount of the side paddle 15 in the developing direction are provided in the back base 13 and the side paddle 15 by abutting against each other. Therefore, a developed position of the side support portion 24 can be defined. The developed position is held so that a function as the frame of the child seat 10 can be strengthened.

Moreover, the above-described each embodiment may be changed as follows.

In the above-described embodiment, the air bags 30 (31 to 34) for support are respectively provided on the surface 13a of the back base 13, the surface 15a of each side paddle 15, and the surface 16a of the body portion 16 of the cushion base 14. However, the disclosure is not limited to the embodiment but the position at which the air bag 30 for support is provided may be arbitrary changed. For example, the air bag 30 may be provided in one of the back base 13, each side paddle 15, and the cushion base 14, or any of these may be configured without the air bag 30. For example, the number of the air bags 30 provided in the back base 13, each side paddle 15, and the cushion base 14 respectively may be arbitrary changed, for example, the number of the air bags 30 provided in the back base 13 is one.

In the above-described embodiment, the upper end portion 33a of the air bag 33 provided in the side paddle 15 functions as the air bag 51 for developing that rotates the side paddle 15 in the developing direction. However, the disclosure is not limited to the embodiment but the air bag 51 for developing and the air bags 30 (33) for support may be configured independently of each other. The air bag 51 for developing may be configured to be provided at the lower end portion of the side paddle 15, that is, at an end portion on a side arranged downward in the upward and downward direction of the seat back 3.

In addition, in the above-described embodiment, the cushion base 14 is configured to be rotated in the developing direction by being pressed against the side paddle 15 rotated by expansion of the air bag 51 for developing, but the cushion base 14 and the side paddle 15 may also be configured to rotate independently of each other. Furthermore, each side paddle 15 may also be configured to be manually developed. In a state where the seating portion 22 of the child seat 10 is developed on the seat cushion 2 by the rotation of the cushion base 14, the seat cover X2 covering each side paddle 15 which is in the storage state may also be configured to form the backrest surface 23s of the child seat 10 (see Fig. 3).

Furthermore, the air bag 51 for developing may also be configured to be interposed between the back base 13 and the seat cover X1, and between the cushion base 14 and the seat cover X1 in a state of straddling the connecting shaft L1 of the cushion base 14 with respect to the back base 13. Therefore, the seating portion 22 of the child seat 10 can be independently and automatically developed.

In addition, the cushion base 14 as the movable member MP may not be provided. In addition, in this case, a configuration, in which the seating surface 2s is bulged by expanding the air bag 35 (see Fig. 2) provided on the inside of the seat cushion 2, may be adopted. A configuration which does not include the side paddle 15 is not excluded.

In the above-described embodiment, the torsion coil spring 58 as the urging member for urging the side paddle 15 to rotate in the storage direction is provided at the position coaxial with the connecting shaft L2 of the side paddle 15 with respect to the back base 13. However, the disclosure is not limited to the embodiment but, for example, the configuration of the urging member such as a leaf spring or a torsion spring may be arbitrary changed. Furthermore, an urging member for urging the cushion base 14 to rotate in the storage direction may also be provided. A configuration which does not include such an urging member may also be provided.

In the above-described embodiment, the stopper portions 54 and 55 capable of limiting the rotation amount of the side paddle 15 in the developing direction are provided in the back base 13 and the side paddle 15 by abutting against each other. However, the disclosure is not limited to the embodiment but the configuration of the stopper structure for defining the developing position of the side support portion 24 may also be arbitrary changed. A configuration which does not include such a stopper structure may also be provided.

In the above-described embodiment, the user such as a parent of the child sets the optimum seat support shape using an adjustment switch (not illustrated) so that the internal pressure target value P0 of each air bag 30 is updated as needed. However, the disclosure is not limited to the embodiment but a configuration in which the internal pressure target value P0 of each air bag 30 is automatically set by detecting the physique of the child seated on the child seat 10, for example, through image analysis using a camera may also be provided.

In the above-described embodiment, the air bag 51 for developing is interposed between the back base 13 and the side paddle 15 in a state of being folded into two together with the seat cover X2 covering the back base 13 and the side paddle 15 when the child seat 10 is stored. However, the disclosure is not limited to the embodiment. As long as the air bag 51 can generate a force pressing the back base 13 and the movable member MP by being filled with air and expanded, the folded shape may not necessarily be folded into two. Also, the seat cover X may not necessarily be folded into two when stored.

The principles, preferred embodiment and mode of operation of the present invention have been described in the foregoing specification. Further, the embodiments described herein are to be regarded as illustrative rather than restrictive. Variations and changes may be made by others, and equivalents employed, without departing from the spirit of the present invention, as long as they fall into the scope of the claims. Accordingly, it is expressly intended that all such variations, changes and equivalents which fall within the spirit and scope of the present invention as defined in the claims, be embraced thereby.

## Claims

1. A vehicle seat device (11) comprising:
a back base (13) that is fixed to a frame (F) of a seat back (3);
a movable member (MP) that is rotatably connected to the back base; and
an air bag (35) that is provided on an inside of a seat cover (X, X0, X1, X2) covering the back base and the movable member,
wherein the movable member is rotated so that a backrest surface (3s) of the seat back is divided to develop a child seat (10), and
the air bag is expanded so that the seat cover is bulged to form a support shape of the child seat.

2. The vehicle seat device according to claim 1, further comprising:
a side paddle (15) that develops a side support portion (24) of the child seat on the backrest surface by rotating with respect to the back base around a connecting shaft (L2) extending in an upward and downward direction of the seat back.

3. The vehicle seat device according to claim 2,
wherein the air bag is provided to be interposed between the side paddle and the seat cover.

4. The vehicle seat device according to any one of claims 1 to 3, further comprising:
a cushion base (14) that develops a seating portion (22) of the child seat by rotating with respect to the back base around a connecting shaft (L1) extending in a width direction of the seat back.

5. The vehicle seat device according to claim 4,
wherein the air bag is provided to be interposed between the cushion base and the seat cover.

6. The vehicle seat device according to any one of claims 1 to 5,
wherein the air bag is provided to be interposed between the back base and the seat cover.

7. The vehicle seat device according to any one of claims 1 to 6, further comprising:
an air bag for developing (51) that is interposed between the back base and the seat cover, and between the movable member and the seat cover in a state of straddling the connecting shaft between the back base and the movable member.

8. The vehicle seat device according to claim 1, further comprising:
a side paddle (15) that develops a side support portion (24) of the child seat on the backrest surface by rotating with respect to the back base around a connecting shaft (L2) extending in an upward and downward direction of the seat back; and
an air bag for developing (51) that is interposed between the back base and the seat cover, and between the side paddle and the seat cover in a state of straddling the connecting shaft.

9. The vehicle seat device according to claim 8,
wherein the air bag for developing is provided at an upper end portion of the side paddle.

10. The vehicle seat device according to claim 8 or 9,
wherein the air bag for developing is integrally configured with an air bag for support (30) which is interposed between the side paddle and the seat cover.

11. The vehicle seat device according to any one of claims 8 to 10, further comprising:
a cushion base (14) that develops the seating portion of the child seat on the seat cushion by rotating with respect to the back base around the connecting shaft extending in the width direction of the seat back,
wherein the cushion base is configured to be rotated in a developing direction by being pressed against the side paddle rotated by expansion of the air bag for developing.

12. The vehicle seat device according to any one of claims 1 to 11, further comprising:
an urging member (58) that urges the movable member to rotate in a storage direction.

13. The vehicle seat device according to any one of claims 1 to 12,
wherein the back base and the movable member are provided with stopper portions (54, 55) capable of limiting a rotation amount of the movable member in a developing direction by abutting against each other.

## Patentansprüche

1. Fahrzeugsitzvorrichtung (11) mit:
einer Rückenlehnenbasis (13), die an einem Rahmen (F) einer Sitzlehne (3) fixiert ist;
einem beweglichen Element (MP), das mit der Rückenlehnenbasis drehbar verbunden ist; und
einem Airbag (35), der an einer Innenseite einer Sitzabdeckung (X, X0, X1, X2) vorgesehen ist, die die Rückenlehnenbasis und das bewegliche Element bedeckt,
wobei das bewegliche Element so gedreht wird, dass eine Rückenlehenfläche (3s) der Sitzlehne geteilt wird, um einen Kindersitz (10) zu entfalten, und
der Airbag so ausgedehnt wird, dass die Sitzabdeckung so ausbaucht, dass sie eine Abstützform des Kindersitzes ausbildet.

2. Fahrzeugsitzvorrichtung gemäß Anspruch 1, die des Weiteren Folgendes aufweist:
ein Seitenschaufelblatt (15), das einen Seitenstützabschnitt (24) des Kindersitzes an der Rückenlehnenfläche entfaltet durch Drehen in Bezug auf die Rückenlehnenbasis um eine Verbindungswelle (L2), die sich in einer nach oben und nach unten weisenden Richtung der Sitzlehne erstreckt.

3. Fahrzeugsitzvorrichtung gemäß Anspruch 2,
wobei der Airbag so vorgesehen ist, dass er zwischen dem Seitenschaufelblatt und der Sitzabdeckung angeordnet ist.

4. Fahrzeugsitzvorrichtung gemäß einem der Ansprüche 1 bis 3, die des Weiteren Folgendes aufweist:
eine Polsterbasis (14), die einen Sitzabschnitt (22) des Kindersitzes entfaltet durch Drehen in Bezug auf die Rückenlehnenbasis um eine Verbindungswelle (L1), die sich in einer Breitenrichtung der Sitzlehne erstreckt.

5. Fahrzeugsitzvorrichtung gemäß Anspruch 4,
wobei der Airbag so vorgesehen ist, dass er zwischen der Polsterbasis und der Sitzabdeckung angeordnet ist.

6. Fahrzeugsitzvorrichtung gemäß einem der Ansprüche 1 bis 5,
wobei der Airbag so vorgesehen ist, dass er zwischen der Rückenlehnenbasis und der Sitzabdeckung angeordnet ist.

7. Fahrzeugsitzvorrichtung gemäß einem der Ansprüche 1 bis 6, die des Weiteren Folgendes aufweist:
einen Airbag für ein Entfalten (51), der zwischen der Rückenlehnenbasis und der Sitzabdeckung, und zwischen dem beweglichen Element und der Sitzabdeckung in einem Zustand angeordnet ist, bei dem er die Verbindungswelle zwischen der Rückenlehnenbasis und dem beweglichen Element überspannt.

8. Fahrzeugsitzvorrichtung gemäß Anspruch 1, die des Weiteren Folgendes aufweist:
einem Seitenschaufelblatt (15), das einen Seitenstützabschnitt (24) des Kindersitzes an der Rückenlehnenfläche entfaltet durch Drehen in Bezug auf die Rückenlehnenbasis um eine Verbindungswelle (L2), die sich in einer nach oben und nach unten weisenden Richtung der Sitzlehne erstreckt; und
einen Airbag für ein Entfalten (51), der zwischen der Rückenlehnenbasis und der Sitzabdeckung, und zwischen dem Seitenschaufelblatt und der Sitzabdeckung in einem Zustand angeordnet ist, bei dem er die Verbindungswelle überspannt.

9. Fahrzeugsitzvorrichtung gemäß Anspruch 8,
wobei der Airbag für das Entfalten an einem oberen Endabschnitt des Seitenschaufelblattes vorgesehen ist.

10. Fahrzeugsitzvorrichtung gemäß Anspruch 8 oder 9,
wobei der Airbag für das Entfalten einstückig mit einem Airbag für eine Abstützung (30) aufgebaut ist, der zwischen dem Seitenschaufelblatt und der Sitzabdeckung angeordnet ist.

11. Fahrzeugsitzvorrichtung gemäß einem der Ansprüche 8 bis 10, die des Weiteren Folgendes aufweist:
eine Polsterbasis (14), die den Sitzabschnitt des Kindersitzes an dem Sitzpolster entfaltet durch Drehen in Bezug auf die Rückenlehnenbasis um die Verbindungswelle, die sich in der Breitenrichtung der Sitzlehne erstreckt,
wobei die Polsterbasis so aufgebaut ist, dass sie sich in einer Entfaltungsrichtung dreht, indem sie gegen das Seitenschaufelblatt gedrückt wird, das sich durch Ausdehnen des Airbags für das Entfalten dreht.

12. Fahrzeugsitzvorrichtung gemäß einem der Ansprüche 1 bis 11, die des Weiteren Folgendes aufweist:
ein Drängelement (58), das das bewegliche Element zu einer Drehung in einer Unterbringrichtung drängt.

13. Fahrzeugsitzvorrichtung gemäß einem der Ansprüche 1 bis 12,
wobei die Rückenlehnenbasis und das bewegliche Element mit Stopperabschnitten (54, 55) versehen sind, die dazu in der Lage sind, einen Drehbetrag des beweglichen Elementes in einer Entfaltungsrichtung zu begrenzen, indem sie aneinander anliegen.

## Revendications

1. Dispositif de siège de véhicule (11) comprenant :
une base de dossier (13) qui est fixée sur un cadre (F) d'un dossier de siège (3) ;
un élément mobile (MP) qui est connecté à rotation à la base de dossier ; et
un coussin gonflable (35) qui est placé sur un intérieur d'un revêtement de siège (X, X0, X1, X2) couvrant la base de dossier et l'élément mobile,
dans lequel l'élément mobile est tourné de telle manière qu'une surface d'appui de dos (3s) du dossier de siège est divisée pour développer un siège enfant (10), et
le coussin gonflable est gonflé de telle manière que le revêtement de siège est bombé pour former une forme de support du siège enfant.

2. Dispositif de siège de véhicule selon la revendication 1, comprenant en outre :
une plaque latérale (15) qui développe une partie de support latérale (24) du siège enfant sur la surface d'appui de dos par rotation par rapport à la base de dossier autour d'un axe de liaison (L2) s'étendant dans une direction vers le haut et vers le bas du dossier de siège.

3. Dispositif de siège de véhicule selon la revendication 2,
dans lequel le coussin gonflable est placé pour être intercalé entre la plaque latérale et le revêtement de siège.

4. Dispositif de siège de véhicule selon l'une quelconque des revendications 1 à 3, comprenant en outre :
une base de coussin (14) qui développe une partie de siège (22) du siège enfant par rotation par rapport à la base de dossier autour d'un axe de liaison (L1) s'étendant dans une direction de largeur du dossier de siège.

5. Dispositif de siège de véhicule selon la revendication 4,
dans lequel le coussin gonflable est placé pour être intercalé entre la base de coussin et le revêtement de siège.

6. Dispositif de siège de véhicule selon l'une quelconque des revendications 1 à 5,
dans lequel le coussin gonflable est placé pour être intercalé entre la base de dossier et le revêtement de siège.

7. Dispositif de siège de véhicule selon l'une quelconque des revendications 1 à 6, comprenant en outre :
un coussin gonflable pour développement (51) qui est intercalé entre la base de dossier et le revêtement de siège, et entre l'élément mobile et le revêtement de siège dans un état de chevauchement de l'axe de connexion entre la base de dossier et l'élément mobile.

8. Dispositif de siège de véhicule selon la revendication 1, comprenant en outre :
une plaque latérale (15) qui développe une partie de support latérale (24) du siège enfant sur la surface d'appui de dos par rotation par rapport à la base de dossier autour d'un axe de liaison (L2) s'étendant dans une direction vers le haut et vers le bas du dossier de siège ; et
un coussin gonflable pour développement (51) qui est intercalé entre la base de dossier et le revêtement de siège, et entre l'élément mobile et le revêtement de siège dans un état de chevauchement de l'axe de connexion.

9. Dispositif de siège de véhicule selon la revendication 8,
dans lequel le coussin gonflable pour développement est placé en une partie d'extrémité supérieure de la plaque latérale.

10. Dispositif de siège de véhicule selon la revendication 8 ou 9,
dans lequel le coussin gonflable pour développement est intégralement configuré avec un coussin gonflable de support (30) qui est intercalé entre la plaque latérale et le revêtement de siège.

11. Dispositif de siège de véhicule selon l'une quelconque des revendications 8 à 10, comprenant en outre :
une base de coussin (14) qui développe la partie de siège du siège enfant sur le coussin de siège en tournant par rapport à la base de dossier autour de l'axe de liaison s'étendant dans la direction de largeur du dossier de siège,
dans lequel la base de coussin est configurée pour être tournée dans une direction de développement en étant pressée contre la plaque latérale tournée par l'expansion du coussin gonflable pour développement.

12. Dispositif de siège de véhicule selon l'une quelconque des revendications 1 à 11, comprenant en outre :
un élément de poussée (58) qui pousse l'élément mobile pour tourner dans une direction de rangement.

13. Dispositif de siège de véhicule selon l'une quelconque des revendications 1 à 12,
dans lequel la base de dossier et l'élément mobile sont pourvus de parties d'arrêt (54, 55) pouvant limiter une quantité de rotation de l'élément mobile dans une direction de développement en venant en butée l'une contre l'autre.
